# EUROPÄISCHE PATENTSCHRIFT

(11) **EP 1 669 318 B1**
(45) Veröffentlichungstag und Bekanntmachung des Hinweises auf die Patenterteilung: **24.06.2009**
(21) Anmeldenummer: 04029986.9
(22) Anmeldetag: 17.12.2004
(51) Int. Cl.: B66C 19/00, B62D 5/04

(54) **Portalhubstapler mit Servolenkung**
Straddle carrier with an electric power steering system
Véhicule cavalier avec commande de direction à assistance électrique

(30) Priorität: 11.12.2004 DE 102004059751
(43) Veröffentlichungstag der Anmeldung: 14.06.2006
(73) Patentinhaber: Noell Mobile Systems GmbH, 97080 Würzburg (DE)
(72) Erfinder: Kuhn, Rolf, 97080 Würzburg (DE); Bauer, Reinhard, 97280 Remlingen (DE)
(74) Vertreter: Lüdtke, Frank

(56) Entgegenhaltungen:
- DE-A1-7102004 013 89
- US-A- 3 792 779
- US-A- 6 102 150

## Beschreibung

Die Erfindung betrifft einen Portalhubstapler mit Servolenkung entsprechend dem ersten Patentanspruch.
Die Erfindung ist anwendbar für Portalhubstapler, sogenannte Straddle Carrier.

Portalhubstapler sind in Seehäfen und Containerterminals zum Transportieren und Stapeln von Containern eingesetzt. Sie werden im allgemeinen hydraulisch gelenkt, d. h. von ihrem Dieselmotor wird eine Hydraulikpumpe angetrieben, die das Öl aus einem Behälter über Regelventile in Hydraulikzylinder drückt, welche dann über Lenkgestänge die Räder des Fahrzeuges zu Lenkeinschlägen bewegen.

Ein Portalhubwagen mit elektrischem Radantrieb ist in DE 203 11 886.3 beschrieben, wobei auf die Lenkung des Portalhubwagens nicht eingegangen wird.

Aus US-A-3,792,779 ist ein Portalhubkran mit Servolenkung, bestehend aus zwei Fahrträgern mit lenkbaren Rädern, Stützen, dem Hubwerk, dem Oberrahmen und der Laufkatze bekannt, kein Portalhubstapler, der keine Laufkatze aufweist.

Die hydraulische Lenkung besteht aus einem Hydrauliksystem mit Pumpe, Zylinder, Ventilblock, Ölbehälter und Verrohrung auf dem Fahrzeug.

Für eine solche Lenkung von Straddle Carrier sind sogenannte Lenkkraftsimulatoren bekannt. Sie simulieren eine ansteigende Kraft am Lenkrad des Fahrers, wenn der Lenkausschlag am Lenkrad gegenüber der tatsächlichen Verstellung der Räder zu groß wird, um darauf hinzuweisen, daß eine Überlenkung vorliegt. Lenkkraftsimulatoren gibt es in rein hydraulischer Ausführung oder mit elektrischer Magnetbremse. Reine hydraulische Lenksysteme, wie sie für Straddle Carrier bekannt sind, haben aufgrund der Struktur des Straddle Carriers und der Anordnung der Fahrerkabine den Nachteil, daß viele Rohr- und Schlauchleitungen erforderlich sind, die einerseits starke Verzögerungen hervorrufen und andererseits eine Quelle von häufigen Störungen darstellen. Damit sind rein hydraulische Lenksysteme an Straddle Carriern ungünstig. Nachteilig an den bekannten elektrischen Systemen ist, daß die Lenkkraft durch eine Magnetbremse mit Reibbelag erzeugt wird. Dieser Reibbelag hat den Nachteil, daß der Verschleiß am Bremsbelag eine Veränderung des Bremsmomentes bewirkt, so daß ein häufiges Nachstellen erforderlich wird. Es müssen somit Wartungsarbeiten in einer Werkstatt durchgeführt werden, die zu einer Einschränkung der Verfügbarkeit des Fahrzeuges führen. Ein weiterer Nachteil dieses Systems ist, daß bei Bewegungsumkehr eine Lose oder ein Spiel im Lenkkraftsimulator auftritt, was sich zwar nicht im Lenkbetrieb auswirkt, jedoch dem Fahrer ein ungutes Lenkgefühl vermittelt. Die gleiche Lose ist auch von gebräuchlichen Hydrauliklenkungen bekannt.

Es ist daher Aufgabe der Erfindung, einen Portalhubstapler zu entwickeln, die dem Fahrer ein präzises, automotives Lenkgefühl vermittelt, wobei ein Spiel oder eine Lose nicht auftreten soll, lange störanfällige Hydraulikleitungen entfallen und keine Wartungsarbeiten notwendig sind.

Diese Aufgabe wird durch einen Portalhubstapler mit Servolenkung nach den Merkmalen des ersten Patentanspruches gelöst.
Unteransprüche geben vorteilhafte Ausgestaltungen der Erfindung wieder.

Die erfindungsgemäße Lösung sieht einen Portalhubstapler mit Servolenkung vor, bei dem am Lenkrad ein bürstenloser Servomotor mit regelbarem Inverter angeordnet ist, der in vier Quadranten arbeitet, d. h. der Servomotor kann in beiden Drehrichtungen Treiben oder Bremsen. Somit sind die zuvor beschriebenen Bremskräfte einfach realisierbar und der Fahrer erhält ein automotives Lenkgefühl. Weiterhin wird eine geschwindigkeitsabhängige Rückstellung der Lenkung zur Geradeausfahrt realisiert, wobei wie beim PKW bei Stillstand des Fahrzeuges (Geschwindigkeit 0) auch die Rückstellgeschwindigkeit 0 ist. Sie steigt aber mit wachsender Geschwindigkeit auf einen dem Lenksystem angepaßten Wert an, was zu einem realistischen automotiven Lenkgefühl führt. Bei dieser Rückstellung kann das Lenkrad jedoch auch festgehalten werden, so daß der Fahrer die vollständige Kontrolle über sein Fahrzeug behält. Eine Lose besitzt das System nicht. Das System ist zweikanalig ausgeführt, es besitzt also jeweils zwei Sollwertgeber für die Lenkradstellung, zwei Istwertgeber für die Räderstellung (Lenkwinkel), und zwei elektromagnetische Proportionalventile als Stellglieder für die Hydraulikzylinder. Alle wichtigen Funktionen der Lenkung sind somit redundant ausgeführt und damit ausfallsicher. Von den Sollwertgebern am Servomotor gelangen die zwei Sollwertsignale zum Lenkrechner, dessen Software sie mit den Istwertsignalen von den Lenkwinkelgebern vergleicht und dann über einen Regelalgorithmus Stellsignale errechnet, welche an die hydraulischen Proportionalventile ausgegeben werden. Diese wiederum steuern den Ölfluß in die Stellzylinder für die Räder, wovon an jedem Fahrträger einer angeordnet ist. Die Räder einer Seite können untereinander über Gestänge verbunden sein, damit ein Stellzylinder mehrere Räder lenken kann (Lenkgetriebe).

Mit dem Lenkrechner ist ein weiterer Rechner verbunden, der in Abhängigkeit vom Lenkwinkel die Fahrgeschwindigkeit des Straddle Carriers unter Berücksichtigung des jeweils vorhandenen Schwerpunktes so begrenzt, daß ein Umkippen nicht möglich ist.

Als Lenkrechner und Kippschutzrechner können zum Beispiel mobiltaugliche, robuste Industrierechner (Controller) oder speicherprogrammierbare Steuerungen (SPS) verwendet werden.

Der Ölkreislauf ist mit einer Noteinspeisung und einer Ölwanne verbunden. Weiterhin ist eine Notlenkung vorhanden für den Fall, daß der Lenkrechner ausfällt. Die Hydraulikeinrichtung eines jeden Fahrträgers ist mit der Hydraulikeinrichtung des jeweils anderen Fahrträgers verbunden.

Auftretende Fehler werden auf dem Display des Fahrers als verschiedene Fehlerkategorien angezeigt. Diese sind:
Kategorie 0 : Lenkung ist betriebsfähig,
Kategorie 1: Hinweis auf Überprüfung, Warnung wegen eines nicht erlaubten Betriebszustandes
Kategorie 2: Hinweis auf sofortige Überprüfung, was dann der Fall ist, wenn ein redundantes Bauteil ausgefallen ist und mit dem zweiten Bauteil langsam zur Werkstatt weitergefahren werden kann.
Kategorie 3: Ausfall eines nicht redundanden Bauteils, somit sofortige Stillsetzung des Gerätes, Hinweis zur Benutzung der Notlenkung und Hinzuziehung eines Fachmannes.

Im Folgenden wird die Erfindung an zwei Figuren und einem Ausführungsbeispiel erläutert. Die Figuren zeigen:
- *Figur 1*: Lenksystem des Portalhubstaplers in Funktionsdarstellung.
- *Figur 2*: Fahrerhaus mit Fahrer und Lenkrad mit Stellmotor.

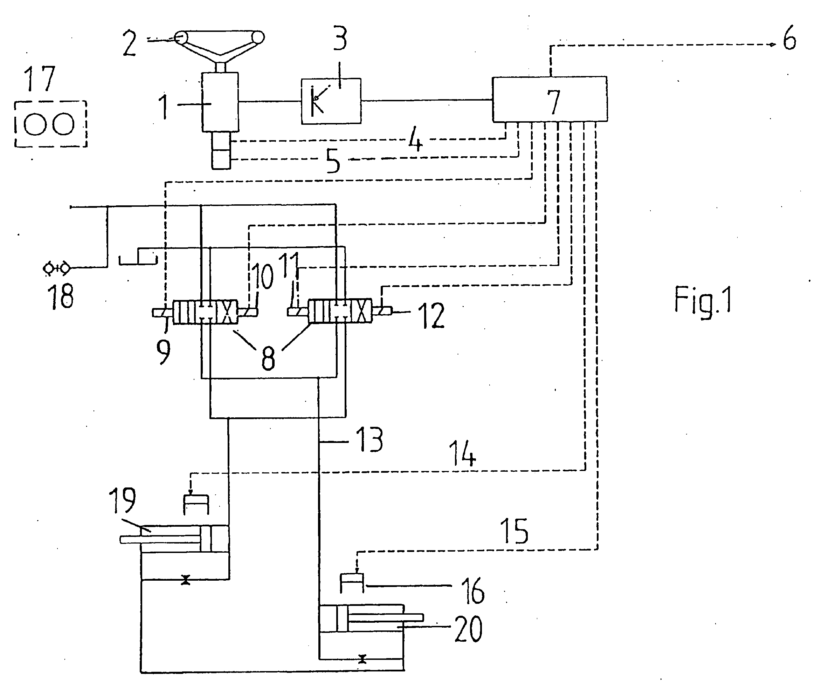

Die *Figur 1* zeigt das Lenkrad 2 mit dem Servomotor 1, der mit einem Inverter 3 verbunden ist und von dem der Sollwert 1 und der Sollwert 2, 4,5 zum Lenkrechner 7 gelangen. Von diesem Lenkrechner 7 wird der Lenkwinkel an den Kippschutzrechner 6 mitgeteilt, wodurch immer Kippsicherheit gewährleistet ist. Weiterhin ist der Lenkrechner 7 mit vier Magneten 9, 10, 11, 12 an zwei hydraulischen Ventilen 8 verbunden. Durch diese hydraulischen Ventile 8 ist über Öl in Hydraulikleitungen 13 das Verstellen von Stellzylindern 19, 20 an den beiden Fahrträgern möglich. Die Ölkreisläufe der Stellzylinder 19, 20 sind untereinander verbunden. Weiterhin sind eine Noteinspeisung 18 und eine Ölwanne vorhanden. Die Ist-Werte 14, 15 der Radstellungen werden über zwei Potentiometer 16 erfaßt und an den Lenkrechner 7 übermittelt. Sofern ein redundantes Bauteil ausfällt, wird das auf dem Display des Fahrer angezeigt. Falls das gesamte Gerät stillgesetzt wird, kann die Notlenkung 17 genutzt werden, die separat von der aufgezeigten Lenkung funktioniert.

Das gezeigte System ist zweikanalig ausgeführt. Es sind zwei Sollwertgeber mit je zwei Spuren sowie zwei Istwertgeber mit je zwei Potentiometern am Lenkgetriebe vorgesehen. Der Lenkrechner ist ausgelegt nach DIN V 19250 in die Anforderungsklasse (AK) 4 nach EN 954-1 in Kategorie 3.

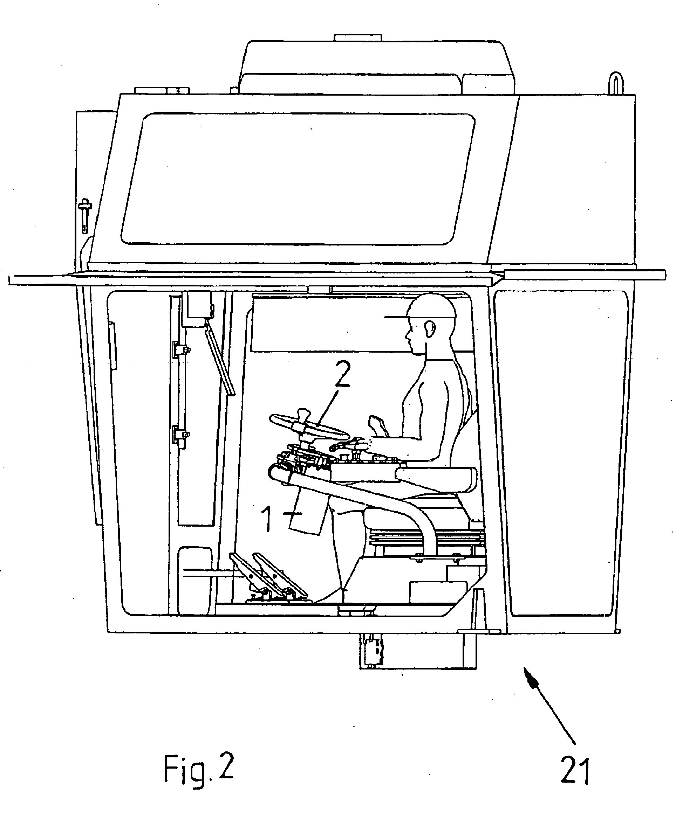

Die *Figur* 2 zeigt die Fahrerkabine 21 mit dem Fahrer, dem Lenkrad 2 und dem Servomotor 1.

### Liste der verwendeten Bezugszeichen

- 1.: Servomotor
- 2.: Lenkrad
- 3.: Inverter
- 4.: Sollwert 1
- 5.: Sollwert 2
- 6.: Lenkwinkelsignal zum Kippschutzrechner
- 7.: Lenkrechner
- 8.: Hydraulisches Proportionalventil
- 9.: Magnet 1
- 10.: Magnet 2
- 11.: Magnet 3
- 12.: Magnet 4
- 13.: Hydraulikleitung
- 14.: Istwert 1
- 15.: Istwert 2
- 16.: Potentiometer
- 17.: Notlenkung
- 18.: Noteinspeisung
- 19.: Stellzylinder am Fahrträger 1
- 20.: Stellzylinder am Fahrträger 2
- 21.: Fahrerkabine eines Straddle Carriers

## Patentansprüche

1. Portalhubstapler mit Servolenkung, bestehend aus zwei Fahrträgern mit lenkbaren Rädern, Stützen, dem Hubwerk, dem Oberrahmen und dem Fahrerhaus, **dadurch gekennzeichnet, daß**
an dem Lenkrad (2) ein Servomotor (1) mit Inverter (3) angeordnet ist, der in vier Quadranten arbeitet und über einen Lenkrechner (7), hydraulische Proportionalventile (8), sowie Stellzylinder (19, 20) und Potentiometer (16) an den Fahrträgern die Räder des Fahrzeuges lenkt.

2. Portalhubstapler nach Anspruch 1, **dadurch gekennzeichnet, daß** der Servomotor (1) wartungsfrei arbeitet.

3. Portalhubstapler nach den Ansprüchen 1 und 2, **dadurch gekennzeichnet, daß** vom Lenkwinkelrechner (7) der Lenkwinkel an einen Rechner (6) übermittelt wird, der die Geschwindigkeit mittels SPS so begrenzt, daß bei gegebener Beladungssituation des Portalhubstaplers ein Kippen des Fahrzeuges vermieden wird.

4. Portalhubstapler nach Anspruch 3, **dadurch gekennzeichnet, daß** das Potentiometer (16) am Fahrträger ein Signal des Lenkwinkel-Istwertes (14, 15) per Radstellung an den Lenkrechner (7) sendet und dieser ein Sollwertsignal an das hydraulische Proportionalventil (8) mit jeweils zwei Magneten (9, 10, 11, 12) sendet und das hydraulische Proportionalventil (8) über eine Hydraulikleitung (13) den Stellzylinder (19, 20) am Fahrzeugträger betätigt.

5. Portalhubstapler nach Anspruch 4, **dadurch gekennzeichnet, daß** zwei hydraulische Proportionalventile (8) für zwei Stellzylinder (19, 20) und zwei Potentiometer (16) redundant angeordnet sind.

6. Portalhubstapler nach Anspruch 5, **dadurch gekennzeichnet, daß** das System zweikanalig ausgeführt ist.

7. Portalhubstapler nach Anspruch 5, **dadurch gekennzeichnet, daß** eine geschwindigkeitsabhängige Rückstellung der Lenkung zur Geradeausfahrt mittels Lenkrechner (7) realisiert wird.

8. Portalhubstapler nach den Ansprüchen 1 bis 7, **dadurch gekennzeichnet, daß** Fehler im Lenksystem auf dem Display des Fahrers angezeigt werden.

9. Portalhubstapler nach Anspruch 8, **dadurch gekennzeichnet, daß** folgende Fehler im Display des Fahrers angezeigt werden:
- Lenkung ist betriebsfähig
- Warnung vor einem nicht erlaubten Betriebszustand
- Ausfall eines redundanten Bauteils
- Stillsetzung des Systems mit Hinweis auf Benutzung der Notlenkung.

## Claims

1. A straddle forklift with power assisted steering, consisting of two carriage beams with steerable wheels, supports, the lifting gear, the top frame and the driver's cab, **characterized in that**,
on the steering wheel (2), there is disposed a servo motor (1) with inverter (3) that operates in four quadrants and that steers the wheels of the vehicle through a steering computer (7), hydraulic proportional valves (8) as well as through actuating cylinders (19, 20) and potentiometers (16) on the carriage beams.

2. The straddle forklift as set forth in claim 1, **characterized in that** the servo motor (1) operates maintenance-free.

3. The straddle forklift as set forth in the claims 1 and 2, **characterized in that** the steering angle computer (7) transmits the steering angle to a computer (6) that limits the velocity by means of SPS so that the vehicle is prevented from tilting at a given loading situation of the straddle forklift.

4. The straddle forklift as set forth in claim 3, **characterized in that** the potentiometer (16) on the carriage beam sends a signal of the actual steering-angle value (14, 15) for each wheel position to the steering computer (7) and that said steering computer sends a target value signal to the hydraulic proportional valve (8) with two respective magnets (9, 10, 11, 12) and that the hydraulic proportional valve (8) actuates the actuating cylinder (19, 20) on the carriage beam through a hydraulic line (13).

5. The straddle forklift as set forth in claim 4, **characterized in that** two hydraulic proportional valves (8) for two actuating cylinders (19, 20) and two potentiometers (16) are disposed redundantly.

6. The straddle forklift as set forth in claim 5, **characterized in that** the system is configured to have two channels.

7. The straddle forklift as set forth in claim 5, **characterized in that** the steering system is returned to the straight-forward driving position as a function of the velocity by means of the steering computer (7).

8. The straddle forklift as set forth in the claims 1 through 7, **characterized in that** failures in the steering system are displayed on the driver's display.

9. The straddle forklift as set forth in claim 8, **characterized in that** the following failures are displayed on the driver's display:
- steering system is operational
- warning against a prohibited operating condition
- failure of a redundant component part
- shutdown of the system with advice to use the emergency steering system.

## Revendications

1. Portique élévateur avec direction assistée, constitué de deux organes porteurs roulants avec roues directionnelles, supports, le mécanisme de levage, le cadre supérieur et la cabine du conducteur,
**caractérisé en ce que**,
sur le volant (2) est disposé un servomoteur (1) avec inverseur (3) qui travaille dans quatre quadrants et dirige les roues du véhicule par l'intermédiaire d'un calculateur de direction (7), des valves proportionnelles (8) ainsi que des cylindres moteurs (19, 20) et des potentiomètres (16) sur les organes porteurs roulants.

2. Portique élévateur selon la revendication 1, **caractérisé en ce que** le servomoteur (1) fonctionne sans maintenance.

3. Portique élévateur selon les revendications 1 et 2, **caractérisé en ce que** l'angle de direction est transmis par le calculateur de l'angle de direction (7) à un ordinateur (6) qui, moyennant |SPS|, limite la vitesse de manière à éviter le basculement du véhicule dans une situation de chargement donnée du portique élévateur.

4. Portique élévateur selon la revendication 3, **caractérisé en ce que** le potentiomètre (16) sur l'organe porteur roulant envoie au calculateur de direction (7) un signal de la valeur réelle (14, 15) de l'angle de direction pour chaque position de roue et que le calculateur envoie un signal de valeur consigne à la valve proportionnelle hydraulique (8) avec deux aimants (9, 10, 11, 12) respectifs et que la valve proportionnelle hydraulique (8) actionne le cylindre moteur (19, 20) sur l'organe porteur roulant par l'intermédiaire d'une conduite hydraulique (13).

5. Portique élévateur selon la revendication 4, **caractérisé en ce que** deux valves proportionnelles (8) hydrauliques pour deux cylindres moteurs (19, 20) et deux potentiomètres (16) sont disposées de façon redondante.

6. Portique élévateur selon la revendication 5, **caractérisé en ce que** le système est réalisé avec deux canaux.

7. Portique élévateur selon la revendication 5, **caractérisé en ce que** la direction est ramenée en position de roulage en ligne droite en fonction de la vitesse au moyen du calculateur de direction (7).

8. Portique élévateur selon les revendications 1 à 7, **caractérisé en ce que** les défaillances dans le système de direction sont affichées sur l'écran du conducteur.

9. Portique élévateur selon la revendication 8, **caractérisé en ce que** les défaillances suivantes sont affichées sur l'écran du conducteur :
- la direction est opérationnelle
- avertissement concernant un état de fonctionnement non autorisé
- panne d'une pièce redondante
- arrêt du système avec invitation à utiliser la direction de secours.
